# EUROPEAN PATENT APPLICATION

(11) **EP 3 893 462 A1**
(43) Date of publication of application: **13.10.2021**
(21) Application number: 20900692.3
(22) Date of filing: 23.01.2020
(51) Int. Cl.: H04L 29/06, B60R 16/023

(54) **MESSAGE TRANSMISSION METHOD AND APPARATUS**

(71) Applicant: Huawei Technologies Co., Ltd., Longgang District Shenzhen Guangdong 518129 (CN)
(72) Inventor: ZHONG, Steven Yin, Guangdong 518129 (CN); SHA, Qingdi, Guangdong 518129 (CN); WEI, Zhuo, Guangdong 518129 (CN)
(74) Representative: Thun, Clemens
(86) International application number: PCT/CN2020/074024
(87) International publication number: WO 2021/147100

(57) **Abstract**

Embodiments of this application provide a packet transmission method and apparatus, relate to the communications field, and can improve security of communication between a diagnostic apparatus and a device in a vehicle. The method includes: encrypting a first packet by using a first key, to obtain a first encrypted packet; generating a first verification code based on the first encrypted packet and a fresh value that is used to indicate information related to time validity of the first encrypted packet; and sending the first encrypted packet, the fresh value, and the first verification code to an electronic control unit in a vehicle.

## Description

### TECHNICAL FIELD

Embodiments of this application relates to the communications field, and in particular, to a packet transmission method and apparatus.

### BACKGROUND

An on-board diagnostics (on-board diagnostics, OBD) system is a diagnostic system embedded in a device (for example, a gateway, a vehicle-mounted communications terminal (T-Box), or another electronic control unit (electronic control unit, ECU)) in a vehicle, and is configured to monitor a running status of the vehicle, and generate a fault code when a problem occurs on the vehicle.

The fault code is used to report+-* an abnormal condition of the vehicle to a vehicle owner or a vehicle factory, so that the vehicle owner or the vehicle factory locates the problem of the vehicle and repairs the vehicle. When the vehicle owner or the vehicle factory locates the problem of the vehicle and repairs the vehicle, a diagnostic apparatus is connected to the device in the vehicle by using an OBD interface. The diagnostic apparatus sends, to the device in the vehicle through the OBD interface, a communication packet used to request the fault code. The device in the vehicle receives, from the diagnostic apparatus, the communication packet used to request the fault code, and sends a communication packet including the fault code to the diagnostic apparatus through the OBD interface. Subsequently, the vehicle owner or the vehicle factory locates the problem of the vehicle and repairs the vehicle.

However, in a process of communication between the diagnostic apparatus and the device in the vehicle, there is no security protection during communication between the diagnostic apparatus and the device in the vehicle, or an operation is performed on a communication packet (for example, the communication packet requesting the fault code or the communication packet including the fault code) between the diagnostic apparatus and the device in the vehicle only by using a private algorithm (for example, exclusive OR, shift, or inversion), and then, the communication packet is sent to a peer end. When there is no security protection for communication between the diagnostic apparatus and the device in the vehicle, communication between the diagnostic apparatus and the device in the vehicle does not use any encryption algorithm or authentication is not performed. Therefore, security of communication between the diagnostic apparatus and the device in the vehicle cannot be ensured. For a case in which the operation is performed on the communication packet between the diagnostic apparatus and the device in the vehicle by using the private algorithm, although communication between the diagnostic apparatus and the device in the vehicle is encrypted or authenticated by using the foregoing private algorithm, because the private algorithm is used to perform simple encryption on the communication packet or perform simple authentication on the diagnostic apparatus, the communication packet is easily cracked, and consequently, the communication packet is revealed, the diagnostic apparatus is simulated, and security is relatively low.

### SUMMARY

Embodiments of this application provide a packet transmission method and apparatus, so that security of communication between a diagnostics apparatus and a device in a vehicle can be improved.

To achieve the foregoing objective, the following technical solutions are used in the embodiments of this application.

According to a first aspect, an embodiment of this application provides a packet transmission method, where the method is applied to a diagnostic apparatus, and the method includes: encrypting a first packet by using a first key, to obtain a first encrypted packet; generating a first verification code based on the first encrypted packet and a fresh value, where the fresh value is used to indicate information related to time validity of the first encrypted packet, and the fresh value includes time at which the diagnostic apparatus obtains the first encrypted packet, or the fresh value includes a value of a counter in the diagnostic apparatus when the diagnostic apparatus obtains the first encrypted packet; and sending the first encrypted packet, the fresh value, and the first verification code to an ECU in a vehicle.

According to the method provided in the first aspect, the first packet may be encrypted by using the first key to obtain the first encrypted packet, the first verification code is generated based on the first encrypted packet and the fresh value, and the first encrypted packet, the fresh value, and the first verification code are sent to the ECU. In one aspect, the first packet communicated between the diagnostic apparatus and the ECU is encrypted by using the first key, thereby improving security of communication between the diagnostic apparatus and the ECU. In another aspect, the first encrypted packet, the fresh value, and the first verification code are sent to the ECU, so that after receiving the first encrypted packet, the fresh value, and the first verification code, the ECU obtains a second verification code based on the first encrypted packet and the fresh value, and determines, by using the first verification code and the second verification code, whether information communicated between the diagnostic apparatus and the ECU is modified, thereby improving security of communication between the diagnostic apparatus and the ECU.

With reference to the first aspect, in a first possible implementation, the method further includes: receiving a first random number from the ECU; generating a second random number and obtaining a signature of the second random number; sending the second random number and the signature of the second random number to the ECU; and performing a complex operation on the first random number and the second random number, to obtain the first key. Based on the foregoing method, the first random number from the ECU may be received, the second random number is generated, the signature of the second random number is obtained, the second random number and the signature of the second random number are sent to the ECU, and the complex operation is performed on the first random number and the second random number to obtain the first key, so that the diagnostic apparatus subsequently communicates with the ECU by using the first key, thereby improving security of communication between the diagnostic apparatus and the ECU. In addition, the diagnostic apparatus sends the signature of the second random number and the second random number to the ECU. Therefore, the ECU may perform verification based on the second random number and the signature of the second random number, to determine whether the second random number is modified, to ensure that the first key is generated in a secure environment.

With reference to the first possible implementation of the first aspect, in a second possible implementation, before the receiving a first random number from the ECU, the method further includes: sending a certificate to the ECU, where the certificate is used to perform verification on the diagnostic apparatus. Based on the foregoing method, the diagnostic apparatus may send the certificate to the ECU, so that the ECU verifies validity of the diagnostic apparatus, thereby improving security of communication between the diagnostic apparatus and the ECU.

With reference to the first aspect, in a third possible implementation, the method further includes: sending, to a key management system, a vehicle identification code of the vehicle to which the ECU belongs; receiving a second key from the key management system, where the second key is obtained based on the vehicle identification code and an original key; and obtaining the first key based on the second key and information related to the ECU. Based on the foregoing method, the vehicle identification code of the vehicle to which the ECU belongs may be sent to the key management system, the second key from the key management system is received, and the first key is obtained based on the second key and the information related to the ECU. In this way, the diagnostic apparatus and the ECU may subsequently encrypt a communication packet between the diagnostic apparatus and the ECU by using the first key, thereby improving security of communication between the diagnostic apparatus and the ECU.

With reference to the third possible implementation of the first aspect, in a fourth possible implementation, the information related to the ECU includes an identifier of the ECU, a domain identifier of a domain to which the ECU belongs, a service identifier of a service to which the ECU belongs, or an identifier of a bus supported by the ECU. Based on the foregoing method, the diagnostic apparatus may obtain the first key based on the second key and the identifier of the ECU, the domain identifier of the domain to which the ECU belongs, the service identifier of the service to which the ECU belongs, or the identifier of the bus supported by the ECU, thereby improving flexibility and diversity of generating the first key by the diagnostic apparatus.

With reference to the first aspect, in a fifth possible implementation, the method further includes: establishing a first channel to a server; and receiving the first key from the server through the first channel. Based on the foregoing method, the diagnostic apparatus may establish the first channel to the server, and receive the first key from the server through the first channel, so that the diagnostic apparatus and the ECU may subsequently encrypt a communication packet between the diagnostic apparatus and the ECU by using the first key, thereby improving security of communication between the diagnostic apparatus and the ECU.

With reference to the fifth possible implementation of the first aspect, in a sixth possible implementation, the first channel is a transport layer security channel, or the first channel is a secure sockets layer channel. Based on the foregoing method, the diagnostic apparatus may establish the transport layer security channel or the secure sockets layer channel to the server, to improve security of communication between the server and the diagnostic apparatus.

According to a second aspect, an embodiment of this application provides a packet transmission method, applied to an ECU, and the method includes: receiving a first encrypted packet, a fresh value, and a first verification code, where the first verification code is generated based on the first encrypted packet and the fresh value, the first encrypted packet is obtained by encrypting a first packet by using a first key, and the fresh value is used to indicate information related to time validity of the first encrypted packet; and verifying the validity of the first encrypted packet based on the first encrypted packet, the fresh value, and the first verification code.

In the method provided in the second aspect, the ECU may receive the first encrypted packet, the fresh value, and the first verification code, and verify the validity of the first encrypted packet based on the first encrypted packet, the fresh value, and the first verification code. In one aspect, the first packet communicated between a diagnostic apparatus and the ECU is encrypted by using the first key, thereby improving security of communication between the diagnostic apparatus and the ECU. In another aspect, after receiving the first encrypted packet, the fresh value, and the first verification code, the ECU may verify the validity of the first encrypted packet based on the first encrypted packet, the fresh value, and the first verification code, thereby improving security of communication between the diagnostic apparatus and the ECU.

With reference to the second aspect, in a first possible implementation, the verifying the validity of the first encrypted packet based on the first encrypted packet, the fresh value, and the first verification code includes: generating a second verification code based on the first encrypted packet and the fresh value; and if the second verification code is the same as the first verification code, determining that the first encrypted packet is valid. Based on the foregoing method, the ECU may generate the second verification code based on the first encrypted packet and the fresh value, and determine, by using the first verification code and the second verification code, whether information communicated between the diagnostic apparatus and the ECU is modified, thereby improving security of communication between the diagnostic apparatus and the ECU.

With reference to the second aspect and the first possible implementation of the second aspect, in a second possible implementation, the method further includes: generating a first random number; sending the first random number to a diagnostic apparatus; receiving a second random number and a signature of the second random number from the diagnostic apparatus; and if verification on the signature of the second random number succeeds, performing a complex operation on the first random number and the second random number, to obtain the first key. Based on the foregoing method, the ECU may generate the first random number, receive the second random number and the signature of the second random number from the diagnostic apparatus, and perform the complex operation on the first random number and the second random number after the verification on the signature of the second random number succeeds, to obtain the first key, so that the ECU subsequently communicates with the diagnostic apparatus by using the first key, thereby improving security of communication between the diagnostic apparatus and the ECU. In addition, the ECU may perform verification based on the second random number and the signature of the second random number, to determine whether the second random number is modified, to ensure that the first key is generated in a secure environment.

With reference to the second possible implementation of the second aspect, in a third possible implementation, before the generating a first random number, the method further includes: receiving a certificate from the diagnostic apparatus; and the generating a first random number includes: if it is verified that the certificate is valid, generating the first random number. Based on the foregoing method, when verifying that the certificate of the diagnostic apparatus is valid, the ECU may negotiate the first key with the diagnostic apparatus, thereby improving security of communication between the diagnostic apparatus and the ECU.

With reference to the second aspect and the first possible implementation of the second aspect, in a fourth possible implementation, the first key is preset in the ECU, the first key is obtained based on a second key and information related to the ECU, and the second key is obtained based on an original key and a vehicle identification code of a vehicle to which the ECU belongs. Based on the foregoing method, the ECU may encrypt a communication packet between the ECU and the diagnostic apparatus by using the first key that is preset in the ECU, thereby improving security of communication between the ECU and the diagnostic apparatus.

With reference to the fourth possible implementation of the second aspect, in a fifth possible implementation, the information related to the ECU includes an identifier of the ECU, a domain identifier of a domain to which the ECU belongs, a service identifier of a service to which the ECU belongs, or an identifier of a bus supported by the ECU. Based on the foregoing method, the first key is obtained based on the second key and the identifier of the ECU, the domain identifier of the domain to which the ECU belongs, the service identifier of the service to which the ECU belongs, or the identifier of the bus supported by the ECU, thereby improving flexibility and diversity of generation of the first key.

With reference to the second aspect and the first possible implementation of the second aspect, in a sixth possible implementation, the method further includes: establishing a second channel to a server; and receiving the first key from the server through the second channel. Based on the foregoing method, the ECU may establish the second channel to the server, and receive the first key from the server through the second channel, so that the ECU and the diagnostic apparatus may subsequently encrypt a communication packet between the ECU and the diagnostic apparatus by using the first key, thereby improving security of communication between the ECU and the diagnostic apparatus.

With reference to the sixth possible implementation of the second aspect, in a seventh possible implementation, the second channel is a transport layer security channel, or the second channel is a secure sockets layer channel. Based on the foregoing method, the ECU may establish the transport layer security channel or the secure sockets layer channel to the server, to improve security of communication between the server and the diagnostic apparatus.

According to a third aspect, an embodiment of this application provides a diagnostic apparatus, and the diagnostic apparatus may implement the method in the first aspect or any possible implementation of the first aspect. The apparatus includes a corresponding unit or component configured to perform the foregoing method. The unit included in the apparatus may be implemented by using software and/or hardware.

According to a fourth aspect, an embodiment of this application provides an ECU, and the ECU may implement the method in the second aspect or any possible implementation of the second aspect. The ECU includes a corresponding unit or component configured to perform the foregoing method. The unit included in the apparatus may be implemented by using software and/or hardware.

According to a fifth aspect, an embodiment of this application provides a diagnostic apparatus, including a processor, where the processor is coupled to a memory, the memory is configured to store a program or an instruction, and when the program or the instruction is executed by the processor, the apparatus implements the method in the first aspect or any possible implementation of the first aspect.

According to a sixth aspect, an embodiment of this application provides an ECU, including a processor, where the processor is coupled to a memory, the memory is configured to store a program or an instruction, and when the program or the instruction is executed by the processor, the ECU is enabled to implement the method in the second aspect or any possible implementation of the second aspect.

According to a seventh aspect, an embodiment of this application provides a diagnostic apparatus, and the apparatus is configured to implement the method in the first aspect or any possible implementation of the first aspect.

According to an eighth aspect, an embodiment of this application provides an ECU, and the ECU is configured to implement the method in the second aspect or any possible implementation of the second aspect.

According to a ninth aspect, an embodiment of this application provides a computer-readable medium, and a computer program or an instruction is stored on the computer-readable medium. When the computer program or the instruction is executed, a computer is enabled to perform the method in the first aspect or any possible implementation of the first aspect.

According to a tenth aspect, an embodiment of this application provides a computer-readable medium, and a computer program or an instruction is stored on the computer-readable medium. When the computer program or the instruction is executed, a computer is enabled to perform the method in the second aspect or any possible implementation of the second aspect.

According to an eleventh aspect, an embodiment of this application provides a computer program product, and the computer program product includes computer program code. When the computer program code is run on a computer, the computer is enabled to perform the method in the first aspect or any possible implementation of the first aspect.

According to a twelfth aspect, an embodiment of this application provides a computer program product, and the computer program product includes computer program code. When the computer program code is run on a computer, the computer is enabled to perform the method in the second aspect or any possible implementation of the second aspect.

According to a thirteenth aspect, an embodiment of this application provides a chip, including a processor, where the processor is coupled to a memory, the memory is configured to store a program or an instruction, and when the program or the instruction is executed by the processor, the chip is enabled to implement the method in the first aspect or any possible implementation of the first aspect.

According to a fourteenth aspect, an embodiment of this application provides a chip, including a processor, where the processor is coupled to a memory, the memory is configured to store a program or an instruction, and when the program or the instruction is executed by the processor, the chip is enabled to implement the method in the second aspect or any possible implementation of the second aspect.

According to a fifteenth aspect, an embodiment of this application provides a communications system. The system includes the diagnostic apparatus in the third aspect and/or the ECU in the fourth aspect, or the system includes the apparatus in the fifth aspect and/or the ECU in the sixth aspect, or the system includes the apparatus in the seventh aspect and/or the ECU in the eighth aspect.

It may be understood that any diagnostic apparatus, ECU, chip, computer-readable medium, computer program product, or communications system provided above is used to perform the corresponding methods provided above. Therefore, for beneficial effects that can be achieved by the diagnostic apparatus, the ECU, the chip, the computer-readable medium, the computer program product, or the communications system, refer to beneficial effects in the corresponding methods. Details are not described herein again.

### BRIEF DESCRIPTION OF DRAWINGS

FIG. 1A is a schematic architectural diagram of a communications system according to an embodiment of this application;
FIG. 1B is a schematic architectural diagram of a vehicle according to an embodiment of this application;
FIG. 1C is a schematic diagram of a manner of connecting an ECU and a diagnostic apparatus according to an embodiment of this application;
FIG. 2 is a schematic diagram of a hardware structure of a communications apparatus according to an embodiment of this application;
FIG. 3 is a schematic flowchart 1 of a packet transmission method according to an embodiment of this application;
FIG. 4 is a schematic flowchart 2 of a packet transmission method according to an embodiment of this application;
FIG. 5 is a schematic flowchart 3 of a packet transmission method according to an embodiment of this application;
FIG. 6A is a schematic diagram of generation of a second key according to an embodiment of this application;
FIG. 6B is a schematic diagram of generation of a first key according to an embodiment of this application;
FIG. 7 is a schematic flowchart 4 of a packet transmission method according to an embodiment of this application;
FIG. 8 is a schematic structural diagram 1 of a diagnostic apparatus according to an embodiment of this application;
FIG. 9 is a schematic structural diagram 2 of a diagnostic apparatus according to an embodiment of this application;
FIG. 10 is a schematic structural diagram 1 of an ECU according to an embodiment of this application; and
FIG. 11 is a schematic structural diagram 2 of an ECU according to an embodiment of this application.

### DESCRIPTION OF EMBODIMENTS

The following describes the implementations of the embodiments of this application in detail with reference to accompanying drawings.

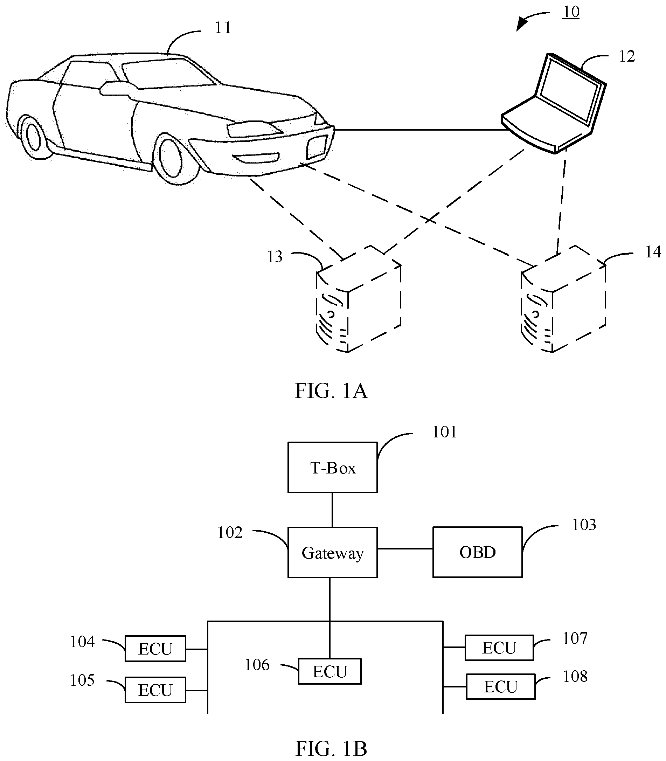

FIG. 1A is a schematic architectural diagram of a communications system 10 according to an embodiment of this application. In FIG. 1A, the communications system 10 may include a vehicle 11 and a diagnostic apparatus 12.

The vehicle 11 in FIG. 1A may be an intelligent connected vehicle. The vehicle 11 may include a plurality of devices. For example, the vehicle 11 may include devices such as a T-Box, a gateway, an OBD, and an ECU. Specifically, an architecture of the vehicle 11 may be shown in FIG. 1B.

FIG. 1B is a schematic architectural diagram of the vehicle 11 according to an embodiment of this application. As shown in FIG. 1B, the vehicle 11 may include a T-Box 101, a gateway 102, an OBD 103, and an ECU 104 to an ECU 108.

The T-Box 101 and the gateway 102 may be connected by using an Ethernet. The gateway 102 and the OBD 103 may be connected by using the Ethernet or a controller area network (controller area network, CAN). The gateway 102 and the ECU may be connected by using the Ethernet, the CAN, a local interconnect network (local interconnect network, LIN), media oriented system transport (media oriented system transport, MOST), or FlexRay. For example, the gateway 102 and the ECU 103 may be connected by using the CAN, and the gateway 102 and the ECU 105 may be connected by using the LIN.

In FIG. 1B, the T-Box 101 may have a capability of communicating with an external device of the vehicle 11 and an internal device of the vehicle 11. The external device of the vehicle 11 may be described as a device outside the vehicle 11, for example, a server, a cloud, or a terminal device (not shown in FIG. 1A) of a user. The internal device of the vehicle 11 may be a device shown in FIG. 1B, for example, the gateway 102 or the ECU 104. The gateway 102 is a core component of the vehicle 11, and the gateway 102 may route network data such as the CAN, the LIN, the MOST, or the FlexRay in different networks. The OBD 103 may have a capability of monitoring a running status of the vehicle, and generate a fault code when a problem occurs on the vehicle. The ECU may be a micro-computer controller of the vehicle 11, and may have a capability of executing a preset control function. For example, the ECU 104 may be configured to control an engine to run, and the ECU 105 may be configured to protect vehicle safety. The ECU may be alternatively a device related to automated driving. For example, the ECU 106 may be a mobile data center (mobile data center, MDC), and the ECU 107 may be a human-machine interaction (human-machine interaction, HMI) device. The MDC may be an intelligent vehicle-mounted computing platform of the vehicle 11. The HMI may be an information entertainment system of the vehicle 11. The T-Box 101, the gateway 102, or the ECU in FIG. 1B may communicate with the diagnostic apparatus 12 by using the OBD 103. For example, the T-Box 101, the gateway 102, or the ECU in FIG. 1B may send a communication packet including a fault code to the diagnostic apparatus 12 through the OBD 103, so that the diagnostic apparatus 12 helps a vehicle owner or a vehicle factory locate a problem of the vehicle and repair the vehicle.

It should be understood that the architecture of the vehicle 11 shown in FIG. 1B is merely used as an example, and is not used to limit a technical solution of this application. A person skilled in the art should understand that, in a specific implementation process, the vehicle 11 may further include another device, and a quantity of gateways and a quantity of ECUs may also be determined based on a specific requirement.

The diagnostic apparatus 12 in FIG. 1A may have a capability of diagnosing a fault of the vehicle. For example, the diagnostic apparatus 12 may help the vehicle owner or the vehicle factory locate the problem of the vehicle and repair the vehicle. The diagnostic apparatus 12 may further communicate with the T-Box 101, the gateway 102, or the ECU in the vehicle 11 by using the OBD 103 in the vehicle 11. For example, the diagnostic apparatus 12 may send a communication packet that is used to request a fault code to the T-Box 101, the gateway 102, or the ECU in the vehicle 11 by using the OBD 103 in the vehicle 11, so that the T-Box 101, the gateway 102, or the ECU in the vehicle 11 sends a communication packet including the fault code to the diagnostic apparatus 12 by using the OBD 103 in the vehicle 11.

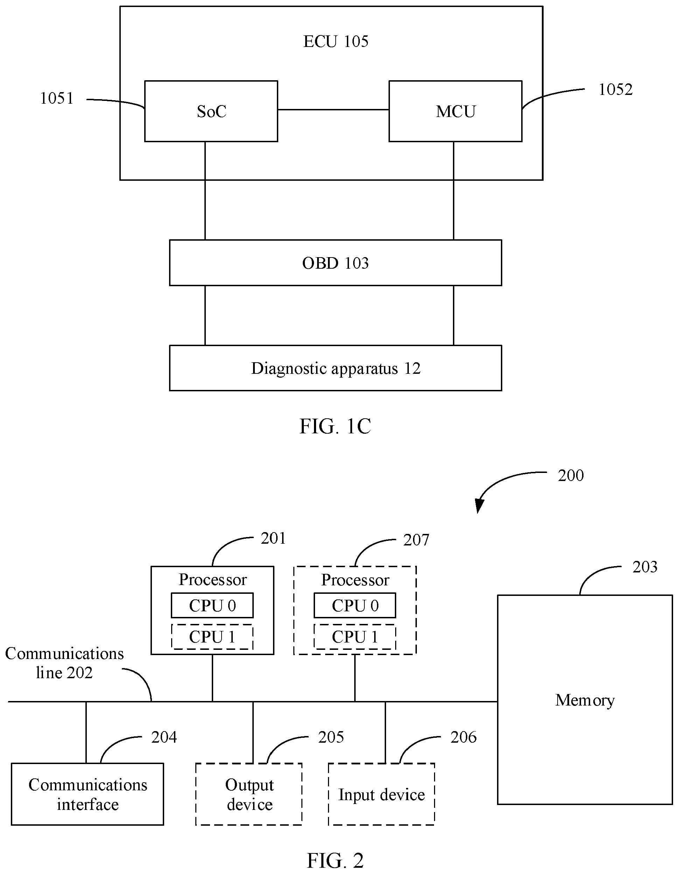

For example, the ECU 105 is used as an example to describe a manner of connecting the device in the vehicle 11 and the diagnostic apparatus 12. As shown in FIG. 1C, a system-on-a-chip (system on a chip, SoC) 1051 in the ECU 105 may be connected to the OBD 103 by using the Ethernet, a microcontroller unit (microcontroller unit, MCU) 1052 in the ECU 105 may be connected to the OBD 103 by using the CAN, and the SoC 1051 and the MCU 1052 may be connected by using a serial port. The OBD 103 may be connected to the diagnostic apparatus 12 by using the Ethernet and the CAN. The SoC 1051 may be configured to obtain a first key, and send the first key to the MCU 1052 through the serial port. The SoC 1051 may be further configured to generate a second verification code, and perform verification on the second verification code. The MCU 1052 may be configured to receive an encrypted packet from the diagnostic apparatus 12 and process the packet. For example, the MCU 1052 may be configured to receive the encrypted packet from the diagnostic apparatus 12 and decrypt the encrypted packet by using the first key.

In some embodiments, the communications system 10 may further include a server 13. The server 13 may have a capability of generating the first key, and the first key may be used to encrypt a communication packet between the diagnostic apparatus 12 and the T-Box 101, the gateway 102, or the ECU. The server 13 may further have a capability of communicating with the diagnostic apparatus 12, the T-Box 101, the gateway 102, or the ECU. For example, the server 13 may establish a secure channel to the diagnostic apparatus 12 and the T-Box 101, and send the generated first key to the diagnostic apparatus 12, the T-Box 101, the gateway 102, or the ECU through the secure channel.

In some embodiments, the communications system 10 may further include a key management system 14. The key management system 14 may have a capability of managing a plurality of keys, and a capability of generating a second key based on a vehicle identification code and an original key. The second key may be used to generate the first key. The key management system 14 may further have a capability of communicating with the diagnostic apparatus 12, the T-Box 101, the gateway 102, or the ECU. For example, the key management system 14 may receive the vehicle identification code from the ECU 106, generate the second key based on the vehicle identification code and the original key, and send the second key to the ECU 106, so that the ECU 106 obtains the first key based on the second key and information related to the ECU 106.

It should be understood that the communications system 10 shown in FIG. 1A is merely used as an example, and is not used to limit a technical solution of this application. A person skilled in the art should understand that, in a specific implementation process, the communications system 10 may further include another device, and a quantity of vehicles 11 or a quantity of diagnostic apparatuses 12 may also be determined based on a specific requirement, and is not limited.

Optionally, the diagnostic apparatus 12 in FIG. 1A or the device such as the T-Box 101, the gateway 102, or the ECU 106 in FIG. 1B in this embodiment of this application may be a function module in one device. It may be understood that the function module may be an element in a hardware device, a software function running on dedicated hardware, or a virtualized function instantiated on a platform (for example, a cloud platform).

For example, the diagnostic apparatus 12 or each device in FIG. 1B may be implemented by using a hardware device 200 in FIG. 2. FIG. 2 is a schematic diagram of a hardware structure of a hardware device applicable to an embodiment of this application. The hardware device 200 may include at least one processor 201, a communications line 202, a memory 203, and at least one communications interface 204.

The processor 201 may be a general CPU, a microprocessor, an application-specific integrated circuit (application-specific integrated circuit, ASIC), or one or more integrated circuits configured to control program execution of the solution of this application.

The communications line 202 may include a path such as a bus for transmitting information between the foregoing components.

The communications interface 204 is configured to communicate with another device or a communications network by using any apparatus such as a transceiver, and is, for example, an Ethernet interface, a radio access network (radio access network, RAN) interface, or a wireless local area network (wireless local area networks, WLAN) interface.

The memory 203 may be a read-only memory (read-only memory, ROM) or another type of static storage device that can store static information and an instruction, a random access memory (random access memory, RAM) or another type of dynamic storage device that can store information and an instruction, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory may exist independently, and is connected to the processor by using the communications line 202. The memory may be alternatively integrated with the processor. The memory provided in this embodiment of this application may generally be non-volatile. The memory 203 is configured to store a computer-executable instruction for executing the solution in this application, and execution is controlled by the processor 201. The processor 201 is configured to execute the computer-executable instruction stored in the memory 203, to implement the method provided in the embodiments of this application.

Optionally, the computer-executable instruction in this embodiment of this application may also be referred to as application program code, and this is not specifically limited in this embodiment of this application.

In specific implementation, in an embodiment, the processor 201 may include one or more CPUs, for example, a CPU 0 and a CPU 1 in FIG. 2.

In specific implementation, in an embodiment, the hardware device 200 may include a plurality of processors, for example, the processor 201 and a processor 207 in FIG. 2. Each of these processors may be a single-core (single-CPU) processor, or may be a multi-core (multi-CPU) processor. The processor herein may be one or more devices, circuits, and/or processing cores used for processing data (for example, a computer program instruction).

In specific implementation, in an embodiment, the hardware device 200 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive user input in a plurality of manners. For example, the input device 206 may be a mouse, a keyboard, a touchscreen device, or a sensing device.

In specific implementation, the hardware device 200 may be an embedded device or a device having a structure similar to that in FIG. 2. A type of the hardware device 200 is not limited in this embodiment of this application.

With reference to FIG. 1A, FIG. 1B, and FIG. 2, the packet transmission method provided in the embodiments of this application is specifically described by using an example in which a diagnostic apparatus communicates with an ECU. For a case in which the diagnostic apparatus communicates with a T-Box or a gateway, refer to the case in which the diagnostic apparatus communicates with the ECU. Details are not described.

It may be understood that, in the following embodiments of this application, a name of a message between devices or a name or the like of each parameter in the message is merely an example, and may also be another name in specific implementation. This is not specifically limited in the embodiments of this application.

It may be understood that, in the embodiments of this application, the diagnostic apparatus or the ECU may perform some or all of steps in this embodiment of this application, and these steps are merely examples. In this embodiment of this application, another step or various step variations may be performed. In addition, each step may be performed in an order different from that presented in this embodiment of this application, and not all steps in this embodiment of this application may be performed.

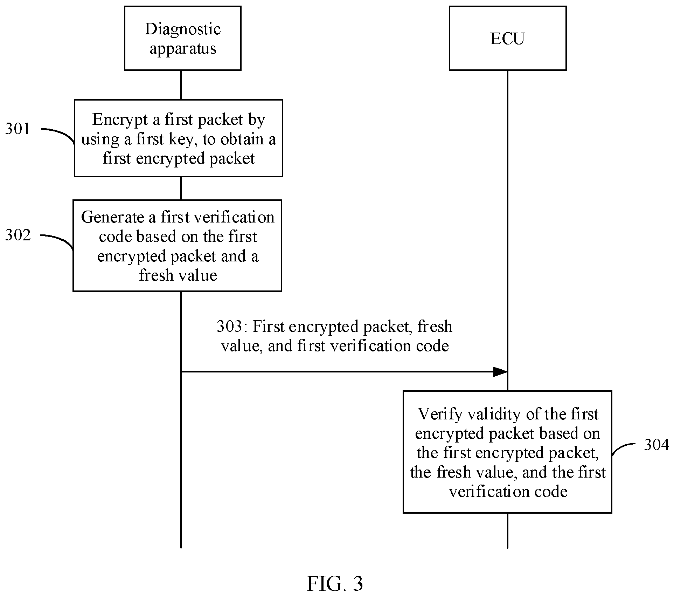

FIG. 3 shows a packet transmission method according to an embodiment of this application. The packet transmission method includes step 301 to step 304.

Step 301: A diagnostic apparatus encrypts a first packet by using a first key, to obtain a first encrypted packet.

The diagnostic apparatus may be the diagnostic apparatus 12 in FIG. 1A, or may be a component in the diagnostic apparatus 12 in FIG. 1A. For example, the diagnostic apparatus may be a processor in the diagnostic apparatus 12, a chip in the diagnostic apparatus 12, or a chip system in the diagnostic apparatus 12. This is not limited.

The first key may be used to encrypt a packet communicated between the diagnostic apparatus and an ECU. The ECU may be any ECU in the ECU 104 to the ECU 108 in FIG. 1B, or may be a component in any ECU in FIG. 1B. For example, the ECU may be a processor in any ECU in FIG. 1B, a chip in any ECU in FIG. 1B, or a chip system in any ECU in FIG. 1A. This is not limited.

The first packet may be used to request a fault code.

Optionally, the diagnostic apparatus obtains the first key in any one of the following four manners.
Manner 1: The first key may be prestored in the diagnostic apparatus, and when the diagnostic apparatus needs to encrypt the packet communicated between the diagnostic apparatus and the ECU, the first key is obtained from the diagnostic apparatus. For example, the first key is stored in a memory (for example, the memory 203 shown in FIG. 2) of the diagnostic apparatus. When the diagnostic apparatus needs to encrypt the packet communicated between the diagnostic apparatus and the ECU, the first key is obtained from the memory of the diagnostic apparatus.
Manner 2: The diagnostic apparatus may negotiate the first key with the ECU. For a specific process in which the diagnostic apparatus negotiates the first key with the ECU, refer to the following descriptions in a first possible implementation of the method shown in FIG. 3.
Manner 3: The diagnostic apparatus may obtain a second key from a key management system, and obtain the first key based on the second key and information related to the ECU. The key management system may be the key management system 14 in FIG. 1A. For a process in which the diagnostic apparatus obtains the second key from the key management system, and obtains the first key based on the second key and the information related to the ECU, refer to the following descriptions in a second possible implementation of the method shown in FIG. 3.
Manner 4: The diagnostic apparatus may obtain the first key from a server. The server may be the server 13 in FIG. 1A. For a process in which the diagnostic apparatus obtains the first key from the server, refer to the following descriptions in a third possible implementation of the method shown in FIG. 3.

Step 302: The diagnostic apparatus generates a first verification code based on the first encrypted packet and a fresh value.

The fresh value may be used to indicate information related to time validity of the first encrypted packet. The fresh value may be referred to as a fresh value in the diagnostic apparatus.

For example, the fresh value may include time at which the diagnostic apparatus obtains the first encrypted packet, or the fresh value may include a value of a counter in the diagnostic apparatus when the diagnostic apparatus obtains the first encrypted packet. The counter may be of various types. For example, the counter may be configured to record a quantity of communication times between the diagnostic apparatus and the ECU, a quantity of synchronization times between the diagnostic apparatus and the ECU, a quantity of restarting times of the diagnostic apparatus, a quantity of restarting times of the ECU, or a quantity of starting times of a vehicle to which the ECU belongs.

It may be understood that, when the counter is configured to record the quantity of restarting times of the diagnostic apparatus, the diagnostic apparatus may periodically (for example, every two seconds) send the fresh value to the ECU, so that after receiving the fresh value, the ECU performs, based on the fresh value, verification on the packet communicated between the diagnostic apparatus and the ECU.

It may be understood that, when the counter is configured to record the quantity of restarting times of the ECU or the quantity of restarting times of the vehicle to which the ECU belongs, the diagnostic apparatus may periodically (for example, every three seconds) receive the fresh value from the ECU, and when communicating with the ECU, obtain, based on a latest received fresh value, the first key, and the packet communicated with the ECU, a verification code that is used to perform verification to determine whether the packet communicated with the ECU is modified.

The first verification code may be used to perform verification to determine whether the first encrypted packet is modified. The first verification code may be a message authentication code (message authentication code, MAC).

Optionally, the diagnostic apparatus generates the first verification code by using a verification code generation apparatus (for example, a MAC generation apparatus). The verification code generation apparatus is a function module in the diagnostic apparatus, and the function module includes software and a chip. The verification code generation apparatus stores a plurality of algorithms, and the diagnostic apparatus may generate the first verification code by using one or more of the plurality of algorithms.

It may be understood that the diagnostic apparatus may not use the fresh value when generating the first verification code. For example, the diagnostic apparatus generates the first verification code based on the first encrypted packet.

Step 303: The diagnostic apparatus sends the first encrypted packet, the fresh value, and the first verification code to the ECU.

In actual application, to improve transmission efficiency, the diagnostic apparatus may alternatively send the first encrypted packet, a truncated fresh value, and a truncated first verification code to the ECU.

The truncated fresh value may be obtained by performing lower-bit truncation on the fresh value. For example, the fresh value is 16 bits, and the truncated fresh value may be lowest 8 bits in the fresh value. For example, if the fresh value is 0110100110110110, the truncated fresh value is 10110110.

The truncated first verification code may be obtained by performing higher-bit truncation on the first verification code. For example, the first verification code is 128 bits, and the truncated first verification code may be highest 24 bits in the first verification code.

Optionally, the diagnostic apparatus sends the first encrypted packet, the fresh value, and the first verification code to the ECU through an interface of an OBD. The OBD may be the OBD 103 in FIG. 1B, or may be a component in the OBD 103 in FIG. 1B. For example, the OBD may be a processor in the OBD 103, a chip in the OBD 103, or a chip system in the OBD 103. This is not limited.

It may be understood that, when the diagnostic apparatus does not use the fresh value when generating the first verification code, the diagnostic apparatus sends the first encrypted packet and the first verification code to the ECU.

Accordingly, the ECU receives the first encrypted packet, the fresh value, and the first verification code from the diagnostic apparatus.

Optionally, the ECU receives the first encrypted packet, the fresh value, and the first verification code from the diagnostic apparatus through the interface of the OBD.

It may be understood that, when the diagnostic apparatus does not use the fresh value when generating the first verification code, the ECU receives the first encrypted packet and the first verification code from the diagnostic apparatus.

Step 304: The ECU verifies validity of the first encrypted packet based on the first encrypted packet, the fresh value, and the first verification code.

Optionally, that the ECU verifies validity of the first encrypted packet based on the first encrypted packet, the fresh value, and the first verification code includes: The ECU generates a second verification code based on the first encrypted packet and the fresh value, and if the second verification code is the same as the first verification code, determines that the first encrypted packet is valid.

It may be understood that the ECU generates the second verification code by using a same method as that used when the diagnostic apparatus generates the first verification code. For example, the ECU generates the second verification code by using a verification code generation apparatus (for example, a MAC generation apparatus). The verification code generation apparatus is a function module in the ECU, and the function module includes software and a chip. The verification code generation apparatus stores a plurality of algorithms. When generating the second verification code, the ECU may generate the second verification code by using one or more of the plurality of algorithms. The one or more algorithms are the same as the one or more algorithms used when the diagnostic apparatus generates the first verification code.

Optionally, if the first encrypted packet is valid, the ECU decrypts the first encrypted packet by using the first key, to obtain the first packet.

It may be understood that if the second verification code is different from the first verification code, it indicates that the first encrypted packet is invalid, or that the first encrypted packet and/or the fresh value and/or the first verification code are/is modified, and the ECU does not decrypt the first encrypted packet, or the ECU discards the first encrypted packet.

Optionally, when the diagnostic apparatus sends the first encrypted packet, the truncated fresh value, and the truncated first verification code to the ECU, the ECU receives the first encrypted packet, the truncated fresh value, and the truncated first verification code from the diagnostic apparatus, restores the fresh value based on the truncated fresh value, and verifies the validity of the first encrypted packet based on the first encrypted packet, the fresh value, and the truncated first verification code.

Further optionally, that the ECU restores the fresh value based on the truncated fresh value includes: The EUC combines the truncated fresh value and a higher-bit part of the fresh value in the ECU to obtain the fresh value. For example, the fresh value in the diagnostic apparatus and the fresh value in the ECU are 16 bits, and the truncated fresh value is lowest 8 bits in the fresh value. The ECU may combine highest 8 bits in the fresh value in the ECU and the truncated fresh value, to obtain the fresh value in the diagnostic apparatus.

Optionally, that the ECU verifies the validity of the first encrypted packet based on the first encrypted packet, the fresh value, and the truncated first verification code includes: generating a second verification code based on the first encrypted packet and the fresh value; obtaining a truncated second verification code based on the second verification code; and if the truncated second verification code is the same as the truncated first verification code, determining that the first encrypted packet is valid.

The truncated second verification code may be obtained by performing higher-bit truncation on the second verification code. For example, the second verification code is 128 bits, and the truncated second verification code may be highest 24 bits in the second verification code.

It may be understood that the ECU generates the second verification code by using a same method as that used when the diagnostic apparatus generates the first verification code.

Optionally, if the first encrypted packet is valid, the ECU decrypts the first encrypted packet by using the first key, to obtain the first packet.

It may be understood that if the truncated second verification code is different from the truncated first verification code, it indicates that the first encrypted packet is invalid, or that the first encrypted packet and/or the truncated fresh value and/or the truncated first verification code are/is modified, and the ECU does not decrypt the first encrypted packet, or the ECU discards the first encrypted packet.

It may be understood that, when the diagnostic apparatus does not use the fresh value when generating the first verification code, the ECU generates the second verification code based on the first encrypted packet.

It may be understood that in the method shown in FIG. 3, the diagnostic apparatus may further generate a third verification code based on the first packet and the fresh value, encrypt the first packet, the fresh value, and the third verification code by using the first key to obtain encrypted information, and send the encrypted information to the ECU. Correspondingly, the ECU may receive the encrypted information from the diagnostic apparatus, decrypt the encrypted information by using the first key to obtain a decrypted first packet, a decrypted fresh value, and a decrypted third verification code, and generate a fourth verification code based on the decrypted first packet and the decrypted fresh value. If the fourth verification code is the same as the decrypted third verification code, the ECU communicates with the diagnostic apparatus based on the decrypted first packet. If the fourth verification code is different from the decrypted third verification code, the ECU does not communicate with the diagnostic apparatus.

Based on the method in FIG. 3, the diagnostic apparatus may encrypt the first packet by using the first key to obtain the first encrypted packet, generate the first verification code based on the first encrypted packet and the fresh value, and send the first encrypted packet, the fresh value, and the first verification code to the ECU. The ECU receives the first encrypted packet, the fresh value, and the first verification code from the diagnostic apparatus, and verifies the validity of the first encrypted packet based on the first encrypted packet, the fresh value, and the first verification code. In one aspect, the first packet communicated between the diagnostic apparatus and the ECU is encrypted by using the first key, thereby improving security of communication between the diagnostic apparatus and the ECU. In another aspect, the first verification code is obtained based on the first encrypted packet and the fresh value that is used to indicate the information related to the time validity of the first encrypted packet. After receiving the first encrypted packet, the fresh value, and the first verification code, the ECU may obtain the second verification code based on the first encrypted packet and the fresh value, compare the first verification code and the second verification code, and decrypt the first encrypted packet when the first verification code and the second verification code are the same. Therefore, the ECU may determine whether information communicated between the diagnostic apparatus and the ECU is modified, thereby improving security of communication between the diagnostic apparatus and the ECU.

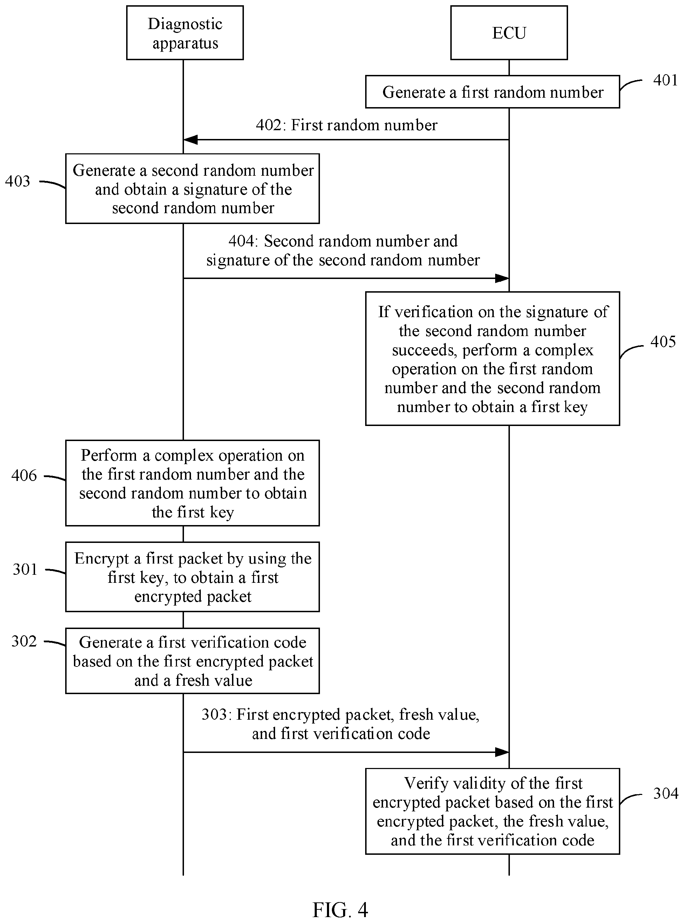

Further optionally, in a first possible implementation of the method shown in FIG. 3, the diagnostic apparatus may negotiate the first key with the ECU. Specifically, as shown in FIG. 4, the method shown in FIG. 3 further includes step 401 to step 406.

Step 401: The ECU generates a first random number.

Optionally, the ECU generates the first random number by using a first algorithm.

In a possible implementation, the ECU (for example, the memory 203 shown in FIG. 2) stores the first algorithm When the ECU needs to generate a random number, the ECU obtains the first algorithm, and generates the first random number by using the first algorithm

In another possible implementation, before step 401, the ECU negotiates the first algorithm with the diagnostic apparatus. When the ECU needs to generate a random number, the ECU generates the first random number by using the first algorithm. For example, the ECU negotiates with the diagnostic apparatus to generate the random number by using the first algorithm *g^{x}* mod *p*, where g and p are known parameters. When the ECU needs to generate the random number, the ECU randomly generates x, and obtains the first random number based on the first algorithm *g^{x}* mod *p*.

Optionally, before step 401, the ECU receives a certificate from the diagnostic apparatus, and verifies validity of the certificate. If the certificate is valid, the ECU performs step 401. If the certificate is invalid, the ECU does not communicate with the diagnostic apparatus.

The certificate may carry a public key of the diagnostic apparatus. The certificate may be a device certificate of the diagnostic apparatus. The device certificate of the diagnostic apparatus may be issued by a root certificate of the diagnostic apparatus. The root certificate of the diagnostic apparatus and the device certificate of the diagnostic apparatus may be preset in the diagnostic apparatus before the diagnostic apparatus is delivered from a factory.

Optionally, the ECU verifies, by using a root certificate of the ECU, the validity of the certificate received by the ECU. The root certificate of the ECU is preset in the ECU before the ECU is delivered from a factory.

Step 402: The ECU sends the first random number to the diagnostic apparatus.

Optionally, the ECU sends the first random number to the diagnostic apparatus through the interface of the OBD.

Step 403: The diagnostic apparatus receives the first random number from the ECU, generates a second random number, and obtains a signature of the second random number.

Optionally, the diagnostic apparatus receives the first random number from the ECU through the interface of the OBD.

Optionally, the diagnostic apparatus generates the second random number by using the first algorithm

In a possible implementation, the diagnostic apparatus (for example, the memory 203 shown in FIG. 2) stores the first algorithm. When the ECU needs to generate a random number, the diagnostic apparatus obtains the first algorithm, and generates the second random number by using the first algorithm

In another possible implementation, before step 401, the diagnostic apparatus negotiates the first algorithm with the ECU. When the diagnostic apparatus needs to generate a random number, the diagnostic apparatus generates the second random number by using the first algorithm. For example, the diagnostic apparatus negotiates with the ECU to generate the random number by using the first algorithm *g^{x}* mod *p*, where g and p are known parameters. When the diagnostic apparatus needs to generate the random number, the diagnostic apparatus randomly generates x, and obtains the second random number based on the first algorithm *g^{x}* mod *p*, where x randomly generated by the diagnostic apparatus and x randomly generated by the ECU may be the same or different.

Optionally, the diagnostic apparatus encrypts the second random number by using a private key of the diagnostic apparatus and by using an RSA (Rivest-Shamir-Adleman) algorithm or a digital signature algorithm (digital signature algorithm, DSA), to obtain the signature of the second random number.

Step 404: The diagnostic apparatus sends the second random number and the signature of the second random number to the ECU.

Optionally, the diagnostic apparatus sends the second random number and the signature of the second random number to the ECU through the interface of the OBD.

Step 405: The ECU receives the second random number and the signature of the second random number from the diagnostic apparatus, and if verification on the signature of the second random number succeeds, performs a complex operation on the first random number and the second random number to obtain the first key.

Optionally, the ECU receives the second random number and the signature of the second random number from the diagnostic apparatus through the interface of the OBD.

Optionally, the ECU decrypts the signature of the second random number by using the public key of the diagnostic apparatus that is carried in the received certificate, to obtain the decrypted signature of the second random number. If the decrypted signature of the second random number is the same as the second random number, the verification on the signature of the second random number succeeds; or if the decrypted signature of the second random number is different from the second random number, the verification on the signature of the second random number fails.

Optionally, the ECU performs the complex operation on the first random number and the second random number based on the first algorithm, to obtain the first key.

For example, the first algorithm is *g^{x}* mod *p*, where g and p are known parameters. The first key may be *g^{ab}* mod *p*, where a is the first random number, and b is the second random number.

Optionally, if the verification on the signature of the second random number fails, the ECU does not communicate with the diagnostic apparatus.

Optionally, if the verification on the signature of the second random number succeeds, the ECU may further send notification information to the diagnostic apparatus, and the notification information is used to indicate that verification performed by the ECU on the second random number succeeds.

Step 406: The diagnostic apparatus performs a complex operation on the first random number and the second random number to obtain the first key.

Optionally, the diagnostic apparatus receives the notification information from the ECU, and performs the complex operation on the first random number and the second random number to obtain the first key.

Optionally, the diagnostic apparatus performs the complex operation on the first random number and the second random number based on the first algorithm, to obtain the first key.

For example, the first algorithm is *g^{x}* mod *p*, where g and p are known parameters. The first key may be *g^{ab}* mod *p*, where a is the first random number, and b is the second random number.

It should be noted that, for the first algorithm, larger values of the first random number, the second random number, and p lead to higher security of communication between the diagnostic apparatus and the ECU.

Based on the method shown in FIG. 4, the ECU may send, to the diagnostic apparatus, the first random number generated by the ECU; the diagnostic apparatus receives the first random number, and may generate the second random number and the signature of the second random number and send the second random number and the signature of the second random number to the ECU; the ECU receives the second random number and the signature of the second random number, and performs verification on the signature of the second random number; and when the verification on the signature of the second random number succeeds, the ECU and the diagnostic apparatus may perform the complex operation on the first random number and the second random number to obtain the first key. Therefore, after the verification performed by the ECU on the signature of the second random number succeeds, in other words, when the ECU determines that communication between the ECU and the diagnostic apparatus is secure, the ECU and the diagnostic apparatus may obtain the first key based on a same algorithm, so that the ECU and the diagnostic apparatus encrypt, by using the first key, a communication packet between the ECU and the diagnostic apparatus, thereby improving security of communication between the ECU and the diagnostic apparatus.

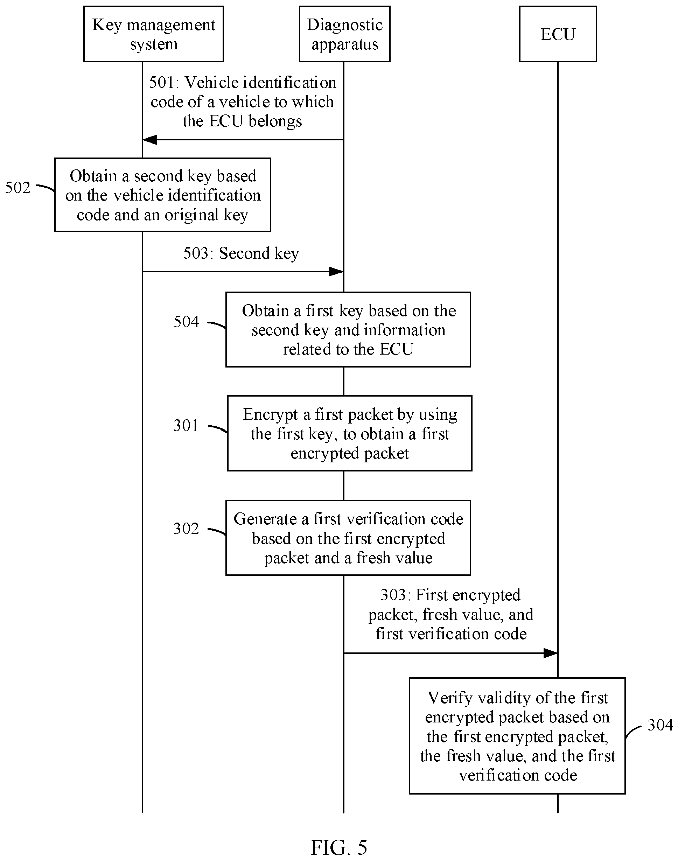

Further optionally, in a second implementation of the method shown in FIG. 3, for the ECU, the first key is preset in the ECU. The first key is obtained based on a second key and information related to the ECU, the second key is obtained based on an original key and a vehicle identification code of a vehicle to which the ECU belongs, and the information related to the ECU may include an identifier of the ECU, a domain identifier of a domain to which the ECU belongs, a service identifier of a service to which the ECU belongs, or an identifier of a bus supported by the ECU. For example, before the ECU is delivered from a factory, the first key obtained based on the second key and the identifier of the ECU is stored in the ECU. For the diagnostic apparatus, the diagnostic apparatus may obtain the second key from a key management system, and obtain the first key based on the second key and the information related to the ECU. Specifically, as shown in FIG. 5, the method shown in FIG. 3 further includes step 501 to step 504.

Step 501: The diagnostic apparatus sends, to a key management system, a vehicle identification code of a vehicle to which the ECU belongs.

The vehicle identification code may be used to identify the vehicle to which the ECU belongs. Different vehicles have different vehicle identification codes.

Step 502: The key management system receives, from the diagnostic apparatus, the vehicle identification code of the vehicle to which the ECU belongs, and obtains a second key based on the vehicle identification code and an original key.

The original key is a key stored in the key management system, and the original key may be used to generate different keys based on different key derivation functions (key derivation function, KDF). The original key may also be referred to as a root key, a total key, or the like. This is not limited.

Optionally, the key management system uses the vehicle identification code and the original key as input of a first KDF, to obtain the second key.

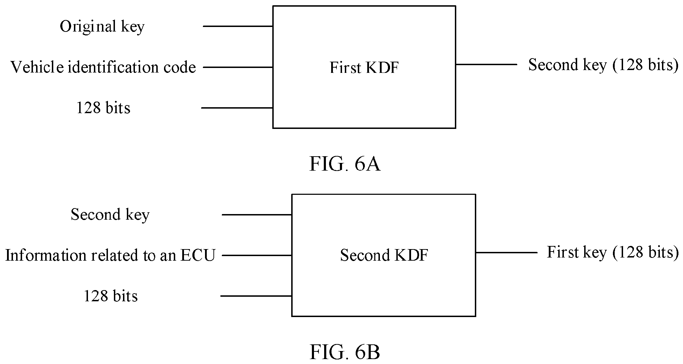

For example, as shown in FIG. 6A, the key management system uses the original key, the vehicle identification code, and an output length (128 bits) of the second key as the input of the first KDF, to obtain a second key of 128 bits.

Step 503: The key management system sends the second key to the diagnostic apparatus.

Step 504: The diagnostic apparatus receives the second key from the key management system, and obtains the first key based on the second key and information related to the ECU.

Optionally, the diagnostic apparatus uses the second key and the information related to the ECU as input of a second KDF, to obtain the first key. The second KDF and the first KDF may be the same or different.

For example, as shown in FIG. 6B, the diagnostic apparatus uses the second key, the information related to the ECU, and an output length (128 bits) of the first key as the input of the second KDF, to obtain a first key of 128 bits.

Based on the method shown in FIG. 5, the diagnostic apparatus may send, to the key management system, the vehicle identification code of the vehicle to which the ECU belongs; the key management system receives the vehicle identification code of the vehicle to which the ECU belongs, and may obtain the second key based on the original key and the vehicle identification code of the vehicle to which the ECU belongs, and send the second key to the diagnostic apparatus; and the diagnostic apparatus receives the second key, and may obtain the first key based on the second key and the information related to the ECU, and the first key is preset in the ECU. In this way, the ECU and the diagnostic apparatus may encrypt, by using the first key, a communication packet between the ECU and the diagnostic apparatus, thereby improving security of communication between the ECU and the diagnostic apparatus.

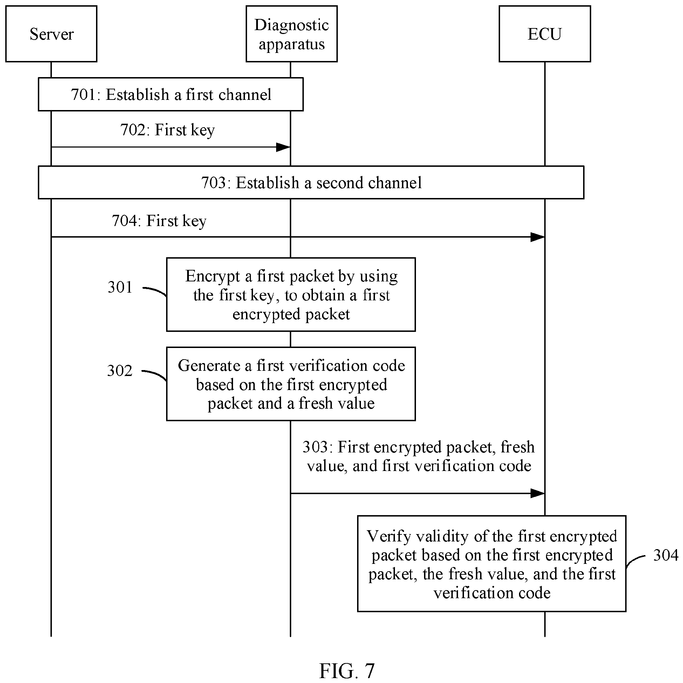

Further optionally, in a third possible implementation of the method shown in FIG. 3, the diagnostic apparatus may obtain the first key from a server. Specifically, as shown in FIG. 7, the method shown in FIG. 3 further includes step 701 to step 704.

Step 701: The diagnostic apparatus establishes a first channel to a server.

The first channel is a transport layer security (transport layer security, TLS) channel, or the first channel is a secure sockets layer (secure sockets layer, SSL) channel.

Optionally, the first channel may be established between the diagnostic apparatus and the server through handshaking. After the first channel is successfully established, the diagnostic apparatus and the server may communicate with each other in an encrypted manner.

A process in which the TLS channel is established between the diagnostic apparatus and the server is described below by using an example in which the TLS is established between the diagnostic apparatus and the server through four times of communication.

Optionally, establishing the TLS channel between the diagnostic apparatus and the server includes: The server receives request information from the diagnostic apparatus, where the request information is used to request to establish the TLS channel to the server; the server sends request response information to the diagnostic apparatus based on the request information, where the request response information is used to determine an encryption method used by the server and the diagnostic apparatus; the server receives completion information from the diagnostic apparatus, where the completion information is used to indicate that the TLS channel is established between the server and the diagnostic apparatus; and the server sends completion response information to the diagnostic apparatus based on the completion information, where the completion response information is used to indicate that the TLS channel is established between the server and the diagnostic apparatus.

Step 702: The server sends the first key to the diagnostic apparatus through the first channel.

Correspondingly, the diagnostic apparatus receives the first key from the server through the first channel.

Step 703: The ECU establishes a second channel to the server.

The second channel is a TLS channel, or the second channel is an SSL channel.

Optionally, the second channel may be established between the ECU and the server through handshaking. After the second channel is successfully established, the ECU and the server may communicate with each other in an encrypted manner. For a process in which the second channel is established between the ECU and the server through handshaking, refer to the process in which the first channel is established between the diagnostic apparatus and the server through handshaking in step 701. Details are not described.

Step 704: The server sends the first key to the ECU through the second channel.

Optionally, that the server sends the first key to the ECU through the second channel includes: The server sends, through the second channel, the first key to a T-Box in the vehicle to which the ECU belongs. The T-Box receives the first key, forwards (or transparently transmits) the first key to a gateway in the vehicle to which the ECU belongs. The gateway receives the first key, and forwards (or transparently transmits) the first key to the ECU.

Correspondingly, the ECU receives the first key from the ECU through the second channel.

It should be noted that an execution sequence of steps 701 and 702 and steps 703 and 704 is not limited in this embodiment of this application. For example, in the method shown in FIG. 7, steps 701 and 702 may be performed first, and then steps 703 and 704 are performed, or steps 703 and 704 may be performed first, and then steps 701 and 702 are performed.

Based on the method shown in FIG. 7, the server may establish the first channel to the diagnostic apparatus, and send the first key to the diagnostic apparatus through the first channel, and the server may further establish the second channel to the ECU, and send the first key to the ECU through the second channel. In this way, the ECU and the diagnostic apparatus may encrypt, by using the first key, a communication packet between the ECU and the diagnostic apparatus, thereby improving security of communication between the ECU and the diagnostic apparatus.

The foregoing describes, mainly from a perspective of interaction between network elements, the solutions provided in the embodiments of this application. It may be understood that, to implement the foregoing functions, the diagnostic apparatus or the ECU includes a corresponding hardware structure and/or a corresponding software module that execute various functions. A person skilled in the art should easily be aware that, in combination with units and algorithm operations of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the diagnostic apparatus or the ECU may be divided into function modules based on the foregoing method examples. For example, each function module corresponding to each function may be obtained through division, or two or more functions may be integrated into one processing module. The integrated module may be implemented in a form of hardware, or may be implemented in a form of a software functional module. It should be noted that, in this embodiment of this application, module division is an example, and is merely logical function division. In actual implementation, another division manner may be used.

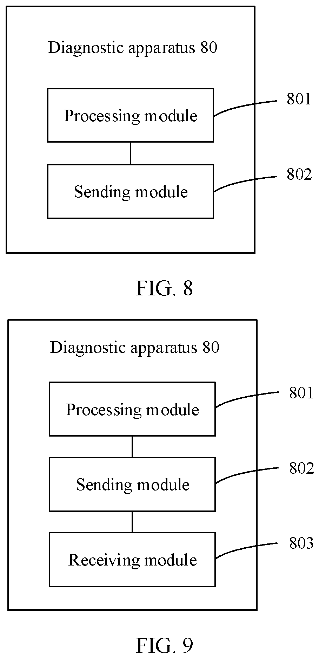

For example, when function modules are obtained through division in an integrated manner, FIG. 8 is a schematic structural diagram of a diagnostic apparatus 80. The diagnostic apparatus 80 may be a diagnostic apparatus or a chip or a system-on-a-chip in the diagnostic apparatus, and the diagnostic apparatus 80 may be configured to perform a function of the diagnostic apparatus in the foregoing embodiment.

In a possible implementation, the diagnostic apparatus 80 shown in FIG. 8 includes a processing module 801 and a sending module 802.

The processing module 801 is configured to encrypt a first packet by using a first key, to obtain a first encrypted packet.

The processing module 801 is further configured to generate a first verification code based on the first encrypted packet and a fresh value, where the fresh value is used to indicate information related to time validity of the first encrypted packet.

The sending module 802 is configured to send the first encrypted packet, the fresh value, and the first verification code to an electronic control unit ECU in a vehicle.

Optionally, as shown in FIG. 9, the diagnostic apparatus 80 further includes a receiving module 803. The receiving module 803 is configured to receive a first random number from the ECU. The processing module 801 is further configured to generate a second random number and obtain a signature of the second random number. The sending module 802 is further configured to send the second random number and the signature of the second random number to the ECU. The processing module 801 is further configured to perform a complex operation on the first random number and the second random number, to obtain the first key.

Optionally, the sending module 802 is further configured to send a certificate to the ECU, where the certificate is used to perform verification on the diagnostic apparatus.

Optionally, the sending module 802 is further configured to send, to a key management system, a vehicle identification code of the vehicle to which the ECU belongs. The receiving module 803 is configured to receive a second key from the key management system, where the second key is obtained based on the vehicle identification code and an original key. The processing module 801 is further configured to obtain the first key based on the second key and information related to the ECU.

Optionally, the information related to the ECU includes an identifier of the ECU, a domain identifier of a domain to which the ECU belongs, a service identifier of a service to which the ECU belongs, or an identifier of a bus supported by the ECU.

Optionally, the processing module 801 is further configured to establish a first channel to a server. The receiving module 803 is further configured to receive the first key from the server through the first channel.

Optionally, the first channel is a transport layer security channel, or the first channel is a secure sockets layer channel.

All related content of each operation involved in the foregoing method embodiments may be referenced to function descriptions of a corresponding function module, and details are not described herein.

In this embodiment, the diagnostic apparatus 80 is presented in a form of obtaining each function module through division in an integrated manner. "Module" herein may indicate a specific ASIC, a circuit, a processor and a memory that execute one or more software or firmware programs, an integrated logic circuit, and/or another device that can provide the foregoing function. In a simple embodiment, a person skilled in the art may know that the diagnostic apparatus 80 may use a form shown in FIG. 2.

For example, the processor 201 in FIG. 2 may invoke the computer-executable instruction stored in the memory 203, so that the diagnostic apparatus 80 performs the packet transmission method in the foregoing method embodiments.

For example, a function/implementation process of the processing module 801, the sending module 802, and the receiving module 803 in FIG. 9 may be implemented by the processor 201 in FIG. 2 by invoking the computer-executable instruction stored in the memory 203. Alternatively, a function/implementation process of the processing module 801 in FIG. 9 may be implemented by the processor 201 in FIG. 2 by invoking the computer-executable instruction stored in the memory 203, and a function/implementation process of the sending module 802 and the receiving module 803 in FIG. 9 may be implemented by the communications interface 204 in FIG. 2.

Because the diagnostic apparatus 80 provided in this embodiment may perform the foregoing packet transmission method, for a technical effect that can be achieved by the diagnostic apparatus 80, refer to the foregoing method embodiments. Details are not described herein.

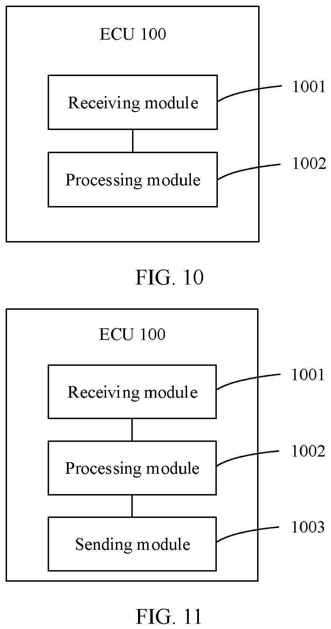

For example, when function modules are obtained through division in an integrated manner, FIG. 10 is a schematic structural diagram of an ECU 100. The ECU 100 may be an ECU or a chip or a system-on-a-chip in the ECU, and the ECU 100 may be configured to perform a function of the ECU in the foregoing embodiment.

In a possible implementation, the ECU 100 shown in FIG. 10 includes a receiving module 1001 and a processing module 1002.

The receiving module 1001 is configured to receive a first encrypted packet, a fresh value, and a first verification code, where the first verification code is generated based on the first encrypted packet and the fresh value, the first encrypted packet is obtained by encrypting a first packet by using a first key, and the fresh value is used to indicate information related to time validity of the first encrypted packet.

The processing module 1002 is configured to verify the validity of the first encrypted packet based on the first encrypted packet, the fresh value, and the first verification code.

Optionally, the processing module 1002 is specifically configured to generate a second verification code based on the first encrypted packet and the fresh value. The processing module 1002 is further specifically configured to: if the second verification code is the same as the first verification code, determine that the first encrypted packet is valid.

Optionally, as shown in FIG. 11, the ECU 100 further includes a sending module 1003. The processing module 1002 is further configured to generate a first random number. The sending module 1003 is configured to send the first random number to the diagnostic apparatus. The receiving module 1001 is further configured to receive a second random number and a signature of the second random number from the diagnostic apparatus. The processing module 1002 is further configured to: if verification on the signature of the second random number succeeds, perform a complex operation on the first random number and the second random number, to obtain the first key.

Optionally, the receiving module 1001 is further configured to receive a certificate from the diagnostic apparatus. The processing module 1002 is specifically configured to: if it is verified that the certificate is valid, generate the first random number.

Optionally, the first key is preset in the ECU, the first key is obtained based on a second key and information related to the ECU, and the second key is obtained based on an original key and a vehicle identification code of a vehicle to which the ECU belongs.

Optionally, the information related to the ECU includes an identifier of the ECU, a domain identifier of a domain to which the ECU belongs, a service identifier of a service to which the ECU belongs, or an identifier of a bus supported by the ECU.

Optionally, the processing module 1002 is further configured to establish a second channel to a server. The receiving module 1001 is further configured to receive the first key from the server through the second channel.

Optionally, the second channel is a transport layer security channel, or the second channel is a secure sockets layer channel.

All related content of each operation involved in the foregoing method embodiments may be referenced to function descriptions of a corresponding function module, and details are not described herein.

In this embodiment, the ECU 100 is presented in a form of obtaining each function module through division in an integrated manner. "Module" herein may indicate a specific ASIC, a circuit, a processor and a memory that execute one or more software or firmware programs, an integrated logic circuit, and/or another device that can provide the foregoing function. In a simple embodiment, a person skilled in the art may know that the ECU 100 may use a form shown in FIG. 2.

For example, the processor 201 in FIG. 2 may invoke the computer-executable instruction stored in the memory 203, so that the ECU 100 performs the packet transmission method in the foregoing method embodiments.

For example, a function/implementation process of the receiving module 1001, the processing module 1002, and the sending module 1003 in FIG. 11 may be implemented by the processor 201 in FIG. 2 by invoking the computer-executable instruction stored in the memory 203. Alternatively, a function/implementation process of the processing module 1002 in FIG. 11 may be implemented by the processor 201 in FIG. 2 by invoking the computer-executable instruction stored in the memory 203, and a function/implementation process of the receiving module 1001 and the sending module 1003 in FIG. 11 may be implemented by the communications interface 204 in FIG. 2.

Because the ECU 100 provided in this embodiment may perform the foregoing packet transmission method, for a technical effect that can be achieved by the ECU 100, refer to the foregoing method embodiments. Details are not described herein.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, in other words, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A packet transmission method, wherein the method is applied to a diagnostic apparatus, and the method comprises:
encrypting a first packet by using a first key, to obtain a first encrypted packet;
generating a first verification code based on the first encrypted packet and a fresh value, wherein the fresh value is used to indicate information related to time validity of the first encrypted packet; and
sending the first encrypted packet, the fresh value, and the first verification code to an electronic control unit ECU in a vehicle.

2. The method according to claim 1, wherein the method further comprises:
receiving a first random number from the ECU;
generating a second random number and obtaining a signature of the second random number;
sending the second random number and the signature of the second random number to the ECU; and
performing a complex operation on the first random number and the second random number, to obtain the first key.

3. The method according to claim 2, wherein before the receiving a first random number from the ECU, the method further comprises:
sending a certificate to the ECU, wherein the certificate is used to perform verification on the diagnostic apparatus.

4. The method according to claim 1, wherein the method further comprises:
sending, to a key management system, a vehicle identification code of the vehicle to which the ECU belongs;
receiving a second key from the key management system, wherein the second key is obtained based on the vehicle identification code and an original key; and
obtaining the first key based on the second key and information related to the ECU.

5. The method according to claim 4, wherein the information related to the ECU comprises an identifier of the ECU, a domain identifier of a domain to which the ECU belongs, a service identifier of a service to which the ECU belongs, or an identifier of a bus supported by the ECU.

6. The method according to claim 1, wherein the method further comprises:
establishing a first channel to a server; and
receiving the first key from the server through the first channel.

7. The method according to claim 6, wherein the first channel is a transport layer security channel, or the first channel is a secure sockets layer channel.

8. A packet transmission method, wherein the method is applied to an electronic control unit ECU in a vehicle, and the method comprises:
receiving a first encrypted packet, a fresh value, and a first verification code, wherein the first verification code is generated based on the first encrypted packet and the fresh value, the first encrypted packet is obtained by encrypting a first packet by using a first key, and the fresh value is used to indicate information related to time validity of the first encrypted packet; and
verifying the validity of the first encrypted packet based on the first encrypted packet, the fresh value, and the first verification code.

9. The method according to claim 8, wherein the verifying the validity of the first encrypted packet based on the first encrypted packet, the fresh value, and the first verification code comprises:
generating a second verification code based on the first encrypted packet and the fresh value; and
if the second verification code is the same as the first verification code, determining that the first encrypted packet is valid.

10. The method according to claim 8 or 9, wherein the method further comprises:
generating a first random number;
sending the first random number to a diagnostic apparatus;
receiving a second random number and a signature of the second random number from the diagnostic apparatus; and
if verification on the signature of the second random number succeeds, performing a complex operation on the first random number and the second random number, to obtain the first key.

11. The method according to claim 10, wherein before the generating a first random number, the method further comprises:
receiving a certificate from the diagnostic apparatus; and
the generating a first random number comprises:
if it is verified that the certificate is valid, generating the first random number.

12. The method according to claim 8 or 9, wherein the first key is preset in the ECU, the first key is obtained based on a second key and information related to the ECU, and the second key is obtained based on an original key and a vehicle identification code of a vehicle to which the ECU belongs.

13. The method according to claim 12, wherein the information related to the ECU comprises an identifier of the ECU, a domain identifier of a domain to which the ECU belongs, a service identifier of a service to which the ECU belongs, or an identifier of a bus supported by the ECU.

14. The method according to claim 8 or 9, wherein the method further comprises:
establishing a second channel to a server; and
receiving the first key from the server through the second channel.

15. The method according to claim 14, wherein the second channel is a transport layer security channel, or the second channel is a secure sockets layer channel.

16. A diagnostic apparatus, wherein the diagnostic apparatus comprises a processing module and a sending module, wherein
the processing module is configured to encrypt a first packet by using a first key, to obtain a first encrypted packet;
the processing module is further configured to generate a first verification code based on the first encrypted packet and a fresh value, wherein the fresh value is used to indicate information related to time validity of the first encrypted packet; and
the sending module is configured to send the first encrypted packet, the fresh value, and the first verification code to an electronic control unit ECU in a vehicle.

17. The diagnostic apparatus according to claim 16, wherein the diagnostic apparatus further comprises a receiving module, wherein
the receiving module is configured to receive a first random number from the ECU;
the processing module is further configured to generate a second random number and obtain a signature of the second random number;
the sending module is further configured to send the second random number and the signature of the second random number to the ECU; and
the processing module is further configured to perform a complex operation on the first random number and the second random number, to obtain the first key.

18. The diagnostic apparatus according to claim 17, wherein
the sending module is further configured to send a certificate to the ECU, wherein the certificate is used to perform verification on the diagnostic apparatus.

19. The diagnostic apparatus according to claim 16, wherein the diagnostic apparatus further comprises a receiving module, wherein
the sending module is further configured to send, to a key management system, a vehicle identification code of the vehicle to which the ECU belongs;
the receiving module is configured to receive a second key from the key management system, wherein the second key is obtained based on the vehicle identification code and an original key; and
the processing module is further configured to obtain the first key based on the second key and information related to the ECU.

20. The diagnostic apparatus according to claim 19, wherein the information related to the ECU comprises an identifier of the ECU, a domain identifier of a domain to which the ECU belongs, a service identifier of a service to which the ECU belongs, or an identifier of a bus supported by the ECU.

21. The diagnostic apparatus according to claim 16, wherein the diagnostic apparatus further comprises a receiving module, wherein
the processing module is further configured to establish a first channel to a server; and
the receiving module is configured to receive the first key from the server through the first channel.

22. The diagnostic apparatus according to claim 21, wherein the first channel is a transport layer security channel, or the first channel is a secure sockets layer channel.

23. An electronic control unit ECU in a vehicle, wherein the ECU comprises a receiving module and a processing module, wherein
the receiving module is configured to receive a first encrypted packet, a fresh value, and a first verification code, wherein the first verification code is generated based on the first encrypted packet and the fresh value, the first encrypted packet is obtained by encrypting a first packet by using a first key, and the fresh value is used to indicate information related to time validity of the first encrypted packet; and
the processing module is further configured to verify the validity of the first encrypted packet based on the first encrypted packet, the fresh value, and the first verification code.

24. The ECU according to claim 23, wherein
the processing module is specifically configured to generate a second verification code based on the first encrypted packet and the fresh value; and
the processing module is further specifically configured to: if the second verification code is the same as the first verification code, determine that the first encrypted packet is valid.

25. The ECU according to claim 23 or 24, wherein the ECU further comprises a sending module, wherein
the processing module is further configured to generate a first random number;
the sending module is configured to send the first random number to a diagnostic apparatus;
the receiving module is further configured to receive a second random number and a signature of the second random number from the diagnostic apparatus; and
the processing module is further configured to: if verification on the signature of the second random number succeeds, perform a complex operation on the first random number and the second random number, to obtain the first key.

26. The ECU according to claim 25, wherein
the receiving module is further configured to receive a certificate from the diagnostic apparatus; and
the processing module is specifically configured to: if it is verified that the certificate is valid, generate the first random number.

27. The ECU according to claim 23 or 24, wherein the first key is preset in the ECU, the first key is obtained based on a second key and information related to the ECU, and the second key is obtained based on an original key and a vehicle identification code of a vehicle to which the ECU belongs.

28. The ECU according to claim 27, wherein the information related to the ECU comprises an identifier of the ECU, a domain identifier of a domain to which the ECU belongs, a service identifier of a service to which the ECU belongs, or an identifier of a bus supported by the ECU.

29. The ECU according to claim 23 or 24, wherein
the processing module is further configured to establish a second channel to a server; and
the receiving module is further configured to receive the first key from the server through the second channel.

30. The ECU according to claim 29, wherein the second channel is a transport layer security channel, or the second channel is a secure sockets layer channel.

31. A diagnostic apparatus, comprising a processor, wherein the processor is coupled to a memory, the memory is configured to store a program or an instruction, and when the program or the instruction is executed by the processor, the apparatus is enabled to perform the method according to any one of claims 1 to 7.

32. An electronic control unit ECU in a vehicle, comprising a processor, wherein the processor is coupled to a memory, the memory is configured to store a program or an instruction, and when the program or the instruction is executed by the processor, the ECU is enabled to perform the method according to any one of claims 8 to 15.

33. A computer-readable medium, wherein the computer-readable medium stores a computer program or an instruction, and when the computer program or the instruction is executed, a computer is enabled to perform the method according to any one of claims 1 to 7.

34. A computer-readable medium, wherein the computer-readable medium stores a computer program or an instruction, and when the computer program or the instruction is executed, a computer is enabled to perform the method according to any one of claims 8 to 15.
